# EUROPÄISCHE PATENTSCHRIFT

(11) **EP 0 346 627 B1**
(45) Veröffentlichungstag und Bekanntmachung des Hinweises auf die Patenterteilung: **05.10.1994**
(21) Anmeldenummer: 89108797.5
(22) Anmeldetag: 17.05.1989
(51) Int. Cl.: A01G 9/10

(54) **Vorrichtung zur Herstellung von Formkörpern zum Aufziehen eines Sämlings**
Device for manufacturing a body for raising a seedling
Dispositif pour la fabrication d'un corps moulé pour cultiver une jeune plante

(30) Priorität: 11.06.1988 DE 8807619 U
(43) Veröffentlichungstag der Anmeldung: 20.12.1989
(73) Patentinhaber: Klasmann-Deilmann GmbH, D-49744 Geeste (DE)
(72) Erfinder: Teichmann, Manfred, CH-9303 Wittenbach (CH)
(74) Vertreter: Riebling, Peter, Dr.-Ing.

(56) Entgegenhaltungen:
- EP-A- 0 090 910
- US-A- 3 805 532
- US-A- 4 074 997

## Beschreibung

Die Erfindung betrifft eine Vorrichtung zur Herstellung eines aus Torf, gegebenenfalls mit Zusätzen von Nährstoffen und einem aus einem hydrophilen Polyurethan-Prepolymeren gebildeten Schaumstoff bestehenden Formkörper zum Aufziehen eines Sämlings, unter Verwendung eines Drehtisches mit mehreren Arbeitsstationen. Eine derartige Vorrichtung zur Herstellung von Formkörpern und ein Verfahren zum Besähen dieser Formkörper ist aus der EP 0 090 910 A3 bekannt. Die darin beschriebene Vorrichtung zum kontinuierlichen und schnellen Formen von gleichen elastomeren, formstabilen Formkörpern enthält Einrichtungen, um kontinuierlich eine wasserenthaltende Bodenschlempe mit einer wasserreaktiven Pre-Polymereverbindung zu mischen, Vorrichtungen, um die Erdschlempe und die Pre-Polymereverbindung in einem bestimmten Mischungsverhältnis kontrolliert zu mischen und entsprechende Einrichtungen, um das Gemisch aus Erdschlempe und Pre-Polymereverbindung an eine Verteilstation weiterzuleiten, um diese in Aufnahmeformen einzufüllen. Diese Aufnahmeformen sind in einer Produktionslinie angeordnet und werden nach der Einfüllstation mittels Transporteinrichtungen befördert.

Eine Spannvorrichtung preßt hierbei das Kasten- und Basisformteil zusammen.

Nachteilig bei dieser Vorrichtung ist, daß eine Vielzahl von einzelnen Kasten- und Basisformteilen jeweils individuell in die Vorrichtung eingesetzt werden und mittels der Spannvorrichtung aufgespannt werden müssen und dabei das während der Härtung expandierende überschüssige Erd-Polymere-Gemisch über die Form hinausquillt und dann mit einem Messer von Hand abgekratzt werden muß.

Hierdurch ist die Herstellung von Formkörpern nicht voll automatisierbar und dadurch wiederum sehr kostenintensiv.

Der Erfindung liegt daher die Aufgabe zugrunde, eine Vorrichtung zur Herstellung eines gattungsgemäßen Formwerkzeugs zum Aufziehen eines Sämlings oder Keimlings vorzuschlagen, bei der auf Kasten- oder Basisformteile sowie auf deren Aufspannen auf dem Werkzeugtisch verzichtet werden kann.

Gemäß der Erfindung wird diese Aufgabe dadurch gelöst, daß in Dosierstationen, in denen nacheinander Torf sowie Wasser in ein Formwerkzeug eingegeben wird, eine nachgeordnete Zumischstation, in der das hydrophile Polyurethan-Prepolymere in das Formwerkzeug eingebracht wird, eine Vermischstation, in der das Polyurethan-Prepolymere mit dem Torf-Wasser-Gemisch vermischt wird und anschließend eine Station zum Auswerfen des fertigen Formkörpers vorgesehen ist.

Der damit hergestellte Formkörper zum Aufziehen eines Sämlings oder Keimlings kommt ohne einen Blumentopf oder ein ähnliches Gebilde aus, und hat einen geringen Kunststoffbedarf. Dadurch kann der Sämling oder Keimling nach Bewässerung sofort wachsen und findet im Formkörper selbst die für sein Wachstum erforderlichen Nährstoffe einschließlich Wasser in ausreichendem Maße vor.

Der Formkörper enthält als Gerüst einen aus einem hydrophilen Polyurethan-Prepolymeren gebildeten offenzelligen Schaumstoff in einem Anteil von etwa 6 bis 8 Gew.-%.

Eine derartige Prepolymeres ist unter der Bezeichnung HYPOL FHP im Handel erhältlich.

Das Prepolymere wird auch aus Kostengründen in einem möglichst geringen Anteil von 6 bis 8 Gew.-% zugesetzt. Es soll die Aufgabe erfüllen, dem Torf-Gemisch die notwendige Festigkeit und Stabilität zu verleihen, so daß der Formkörper ohne Topf als solcher gehandhabt werden kann, gegebenenfalls in einer geeigneten Verpackung, beispielsweise Blisterverpackung. Weil es sich um einen offenzelligen nicht sehr reißfesten Kunststoff handelt, können die Wurzeln des Sämlings ungehindert durch den Formkörper hindurchwachsen und überall die notwendigen Nährstoffe aus dem Erdreich aufnehmen. Ins Erdreich eingesetzt können sie dann ungehindert in das umgebende Erdreich hineinwachsen, so daß Pflanzen beliebiger Größe, auch Bäume, mit Hilfe des neuerungsgemäßen Formkörpers gepflanzt werden können.

Das Prepolymere wird in Anteilen von etwa 6 bis 8 Gew.-%, vorzugsweise etwa 8 Gew.-% dem Torf-Gemisch zugesetzt und nach Mischung mit dem Torf-Gemisch zu dem offenzelligen oder offenporigen Schaumstoffkörper ausgehärtet.

Anschließend muß das Wasser gänzlich oder zumindest zum größten Teil aus dem Formkörper entfernt werden, um ein vorzeitiges Keimen des Sämlings zu verhindern. Nach dem Trocknen des Formkörpers wird dann der Sämling in den Formkörper eingesetzt und dieser ist dann, gegebenenfalls nach geeigneter Verpackung, versandfertig.

An Ort und Stelle wird dann der Formkörper mit der in ihm enthaltenen vorgewachsene Pflanze in das Erdreich eingesetzt, gegossen, und der Sämling beginnt zu wachsen. Dank chemischer Eigenschaften bzw. der Formulierung des System Hypol/Torf und Wasser, kann das gespeicherte Wasser im schaumähnlichen Gebilde nur sehr langsam verdunsten. Dieser Vorgang begünstigt die Wachstumsverhältnisse. Der Kunststoff wird biologisch vom Sämling akzeptiert und ist selbstverständlich nach der Herstellung auf der Produktionsanlage frei von Giftstoffen.

Das Mischungsverhältnis Torf wird man entsprechend den jeweiligen Gegebenheiten wählen. Man kann gegebenenfalls auch mit Erde ohne Zusatz oder ohne wesentlichen Zusatz von Torf auskommen oder auch umgekehrt mit Torf ohne wesentlichen Zusatz von Erde.

Die Erfindung wird nachfolgend anhand von Ausführungsbeispielen näher erläutert, aus denen sich weitere wichtige Merkmale ergeben.

Es zeigt:
- Figur 1: schematisch eine Ansicht einer Vorrichtung zur Herstellung von neuerungsgemäßen Formkörpern,
- Figur 2: in vergrößertem Maßstab einen Axialschnitt durch das hierbei verwendete Formwerkzeug,
- Figur 3: einen in das Erdreich eingesetzten Formkörpern nach der Erfindung zur Erläuterung des Wachstums und des Aufbaus.

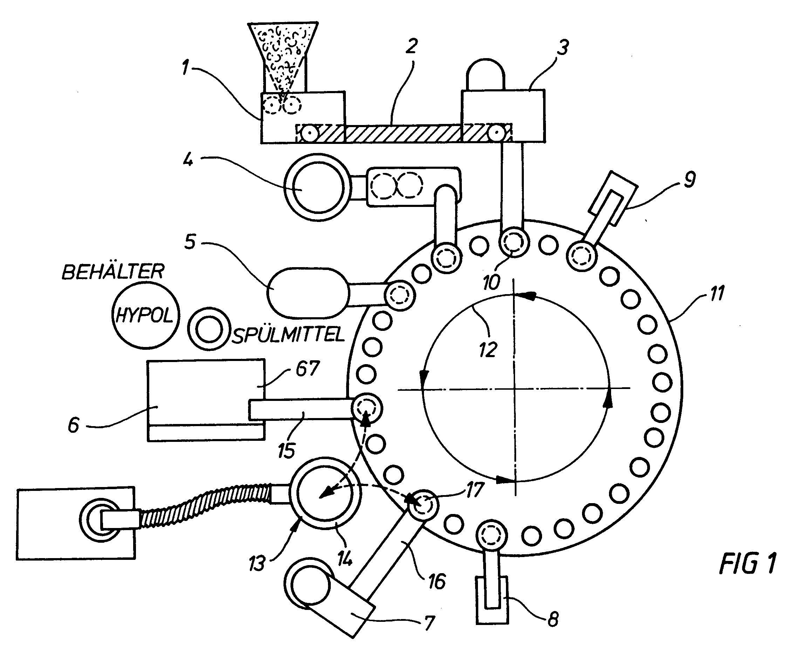

In Fig. 1 wird Torf über den Aufgabetrichter in sehr grober Form in eine Torfmühle 1 eingegeben, d.h. es sind Fasern und dergleichen vorhanden, die in der Torfmühle entsprechend zerkleinert werden. Der zerkleinerte Torf fällt dann auf das Transportband 2, wo er einer Torf-Dosierstation 3 zugeführt wird. Die Dosierstation sorgt dafür, daß eine bestimmte Trockenmenge dieses Torfes, und zwar nach Volumeneinheit genau begrenzt, in das in einem Werkzeugtisch 11 angeordnete Formwerkzeug 10 eingegeben wird. Der Werkzeugtisch 11 dreht sich in Pfeilrichtung 12 im Gegenzeigersinn und das Formwerkzeug mit dem trockenen Torf darin gelangt nun unter eine Wasser-Dosierstation 4, wo in das Wasser auch entsprechende Zusatzstoffe eingegeben werden, und es wird eine genaue abgemessene Menge Wasser in das Werkzeug und den darin enthaltenen Torf gegeben.

Es ist auch möglich, statt der Aufgabe von Torf in den Eingabetrichter der Torfmühle 1 bereits ein Erde-Torf-Gemisch dort einzugeben und entsprechend dann ist das Formwerkzeug 10 über die Dosierstation 3 einzufüllen.

Nach der Zumischung von Wasser in der Dosierstation 4 gelangt das Formwerkzeug in die Vormischstation 5, wo ein Rührer in die Werkzeugaufnahme einfährt und den Torf bzw. das Torf-Gemisch mit Wasser zu einem sämigen Brei verrührt.

Danach gelangt das Formwerkzeug 10 in den Bereich der Zumischstation 6, wo das hydrophile Polyurethan-Prepolymere ("Hypol") zudosiert wird, und zwar genau im vorgesehenen Verhältnis von etwa 8 Gew.-% bezogen auf Trockenmasse.

Im Bereich zwischen der Zumischstation 6 und der Vermischstation 7 ist eine Reinigungsstation 13 angeordnet, die eine eigene Kammer 14 aufweist, und in diese Kammer ist der Mischarm 15 der Zumischstation 6 einschwenkbar, und in dieser Kammer wird mit Wasser gereinigt. Dieser Reinigungsvorgang wird nur bei Arbeitsende, d. h. wenn die Anlage außer Betrieb genommen wird, vorgenommen, damit eine Zusetzung der Zumischstation durch den Kunststoff Hypol verhindert wird. Ferner ist diese Reinigungskammer 14 der Reinigungsstation 13 auch dafür vorgesehen, daß der Mischarm 16 der Vermischstation 7 ebenfalls in diese Kammer einschwenkbar ist, wie es durch die Pfeile gekennzeichnet ist, und ebenfalls dort mit Wasser abgespült werden kann.

Nach dem Durchlauf, d. h. also nach dem Zumischen von Hypol in der Zumischstation 6, läuft das Werkzeug in den Bereich der Vermischstation 7, wo ein Mischarm 16 vorhanden ist, der mit einem Rührer 17 versehen ist, der von oben in das Formwerkzeug eintaucht und aus dem Gemisch Hypol, Wasser und Torf eine gebrauchsfertige Masse verrührt. Diese Masse hat schon fast eine pastenartige Konsistenz. Sie fließt also nicht mehr von selbst aus dem Formwerkzeug heraus, wenn der Mischtopf umgedreht werden würde.

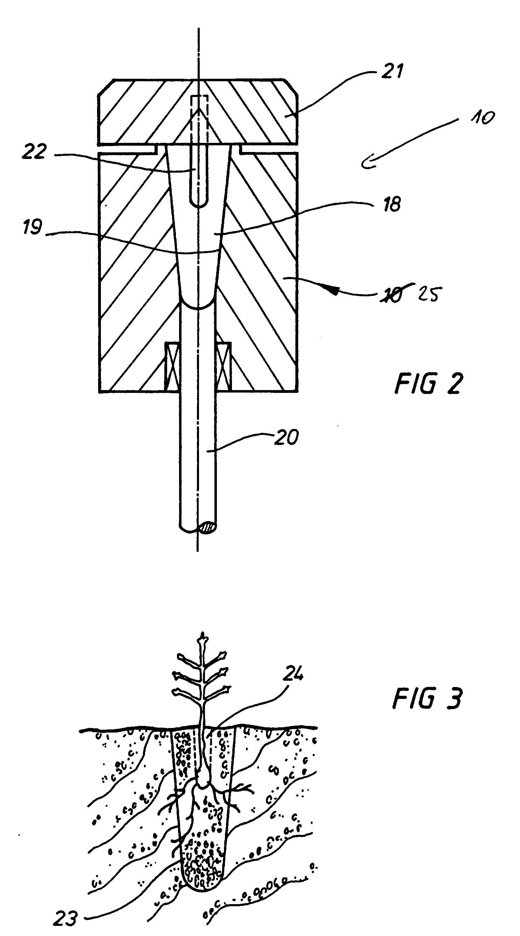

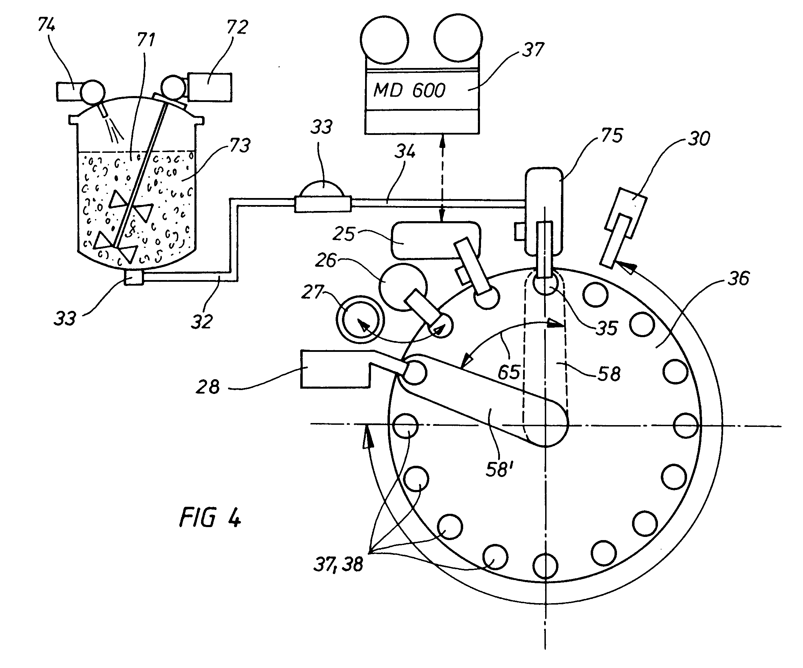

In Figur 2 ist das Formwerkzeug 10 selbst dargestellt. Es besteht aus einem Werkzeugkörper 25, der z. B. aus einem Stahlteil hergestellt ist, der innen eine Werkzeugaufnahme 18 definiert. In diese Werkzeugaufnahme wird also das Material eingegeben, d. h. der Torf über die Dosierstation 3, das Wasser über die Dosierstation 4 und der Kunststoff über die Dosierstation 6. Die Werkzeugausnehmung 18 ist innen mit einer Teflonschicht 19 ausgekleidet, und die Werkzeugform wird von oben durch einen Deckel 21 verschlossen. Der Deckel weist einen axial nach unten vorstehenden Dorn 22 auf, der in dem festgestellten Formkörper 23 gemäß Fig. 3 eine Ausnehmung 24 eindrückt, in die später der Sämling eingedrückt werden kann. Der Deckel 21 ist schwenkbar an einer Seitenfläche des Werkzeuges 10 über ein Scharnier gelagert, kann also aufgeklappt oder abgeklappt werden.

Bis zur Station 8 für das Formwerkzeug war der Deckel 21 also offen. Danach wird er zugeklappt, d. h. das Werkzeug wird geschlossen und der Kunststoff kann nun mit dem Wasser-Torfgemisch entsprechend reagieren. Dazu bedarf es ca. 2,5 Minuten Verweilzeit, d. h. das Formwerkzeug bleibt auf der Drehscheibe 11 stehen und kommt dann nach Ablauf dieser Taktzeit in den Bereich einer Station 9, wo das Auswerfen des fertiggestellten Formkörpers 23 erfolgt.

In Station 9 wird zunächst der Deckel 21 geöffnet, dann wird der Auswerfer 20 in axialer Richtung nach oben bewegt, wodurch der Formkörper 23, der nun fertig hergestellt ist, ausgeworfen und von der Herstellungsmaschine wegtransportiert wird, z. B. über eine Rutsche, eine Rütteleinrichtung, ein Transportband oder dergleichen. Danach gelangt er in eine Trockenstation, wo er getrocknet wird, bis praktisch kein Wasser mehr darin enthalten ist. Nach dem Trocknungsprozeß wird dann der Formkörper 23 mit dem gewünschten Sämling bestückt und dann ist er fertig zur Verpackung.

Vorteil der Anlage ist also ein Durchlaufverfahren, mit dem relativ schnell und unter geringen Kosten im Massenbetrieb derartige Formkörper 23 hergestellt werden können.

### Zeichnungslegende

- 1: Torfmühle
- 2: Transportband
- 3: Dosierstation (Torf)
- 4: Dosierstation (Wasser)
- 5: Vormischstation
- 6: Zumischstation
- 7: Mischstation
- 8: Station
- 9: Station
- 10: Formwerkzeug
- 11: Werkzeugtisch
- 12: Pfeil
- 13: Reinigungsstation
- 14: Kammer
- 15: Mischarm
- 16: Mischarm
- 17: Rührer
- 18: Aufnahme
- 19: Auskleidung
- 20: Auswerfer
- 21: Deckel
- 22: Dorn
- 23: Formkörper
- 24: Ausnehmung
- 25: Werkzeugkörper

## Patentansprüche

1. Vorrichtung zur Herstellung eines aus Torf, gegebenenfalls mit Zusätzen von Nährstoffen und einem aus einem hydrophilen Polyurethan-Prepolymeren gebildeten Schaumstoff bestehenden Formkörpers zum Aufziehen eines Sämlings, unter Verwendung eines Drehtisches mit mehreren Arbeitsstationen, **gekennzeichnet durch** Dosierstationen (3), (4), in denen nacheinander Torf sowie Wasser in ein Formwerkzeug (10) gegeben wird, eine nachgeordnete Zumischstation (6), in der das hydrophile Polyurethan-Prepolymere in das Formwerkzeug eingebracht wird, eine Vermischstation (7), in der das Polyurethan-Prepolymere mit dem Torf-Wasser-Gemisch vermischt wird und anschließend eine Station (9) zum Auswerfen des fertigen Formkörpers.

2. Vorrichtung nach Anspruch 1, **dadurch gekennzeichnet,** daß eine Vormischstation (5) zwischen der letzten Dosierstation (4) und der Zumischstation (6) vorgesehen ist.

3. Vorrichtung nach Anspruch 1 oder 2, **dadurch gekennzeichnet,** daß die Zumischstation einen Mischarm (15) aufweist, der schwenkbar befestigt ist.

4. Vorrichtung nach Anspruch 1 oder 2, **dadurch gekennzeichnet,** daß die Vermischstation (7) einen Mischarm (16) aufweist, der schwenkbar an der Vermischstation (7) befestigt ist.

5. Vorrichtung nach Anspruch 1 bis 4, **dadurch gekennzeichnet,** daß zwischen der Zumischstation (6) und der Vermischstation (7) ein Reinigungsgerät (13) mit einer Reinigungskammer (14) vorgesehen ist, wobei die Reinigungskammer (14) im Schwenkbereich der Mischarme (15), (16) angeordnet ist und diese in die Kammer (14) einschwenkbar sind.

6. Vorrichtung nach Anspruch 1, **dadurch gekennzeichnet,** daß die Station (9) zum Auswerfen des fertigen Formkörpers und die Station (8) in einem derartigen Winkelabstand an dem Werkzeugtisch angeordnet ist, daß die Zeit, in der der Werkzeugtisch (19) diesen Winkelbereich taktweise durchläuft, gleich der Verweilzeit ist, die zur Reaktion des Wasser-Torf-Gemisches mit dem Kunststoff erforderlich ist.

7. Vorrichtung nach Anspruch 1, **dadurch gekennzeichnet,** daß der Werkzeugtisch (19) eine Vielzahl von in gleichmäßigem Abstand über seinen Umfang verteilte Formwerkzeuge aufweist, die bis zur Station (8), nach oben hin offen sind.

8. Vorrichtung nach Anspruch 7, **dadurch gekennzeichnet,** daß an jedem Formwerkzeug (10) ein Deckel (21) vorgesehen ist, der um eine horizontale Achse schwenkbar befestigt ist und das Formwerkzeug nach oben hin abdichtend verschließt.

9. Vorrichtung nach Anspruch 8, **dadurch gekennzeichnet,** daß der Deckel (21) einen nach unten in das Formwerkzeug ragenden Dorn (22) aufweist, der beim Zuklappen des Deckels eine entsprechende Ausnehmung (24) in dem Formkörper ausbildet.

10. Vorrichtung nach einem der Ansprüche 7 bis 9, **dadurch gekennzeichnet,** daß jedes Formwerkzeug (10) einen Auswerfer (20) aufweist, welcher in axialer Richtung verschiebbar gelagert ist und mittels der Auswurfstation betätigbar ist.

11. Vorrichtung nach einem der Ansprüche 8 bis 10, **dadurch gekennzeichnet,** daß das Formwerkzeug (10) an seinen seinen Innenflächen mit einer Teflonschicht (19) ausgegleitet ist.

## Claims

1. A device for the production of a shaped body consisting of peat, if necessary with additives of nutrients, and of a foam material formed from a hydrophilic polyurethane prepolymer, for cultivating a seedling, using a rotary table with several work stations, characterized by dozing stations (3), (4), in which in succession peat and water are fed into a forming tool (10), a subsequently arranged admixing station (6), in which the hydrophilic polyurethane prepolymer is introduced into the forming tool, a mixing station (7), in which the polyurethane prepolymer is mixed with the peat/water mixture and then a station (9) for the ejection of the finished shaped body.

2. A device according to Claim 1, characterised in that a premixing station (5) is provided between the last dozing station (4) and the admixing station (6).

3. A device according to Claim 1 or 2, characterised in that the admixing station has a mixer arm (15), which is pivotably attached.

4. A device according to Claim 1 or 2, characterised in that the mixing station (7) has a mixer arm (16), which is pivotably attached to the mixing station (7).

5. A device according to Claims 1 to 4, characterised in that between the admixing station (6) and the mixing station (7), a cleaning apparatus (13) with a cleaning chamber (14) is provided, in which the cleaning chamber (14) is arranged in the pivotal range of the mixer arms (15), (16) and the latter are able to be swivelled into the chamber (14).

6. A device according to Claim 1, characterised in that the station (9) for the ejection of the finished shaped body and the station (8) are arranged on the tool table at such an angular distance that the time in which the tool table (19) runs through this angle region cyclically is equal to the delay period, which is necessary for the reaction of the water/peat mixture with the plastic.

7. A device according to Claim 1, characterised in that the tool table (19) has a plurality of forming tools distributed at equal distances over its circumference, which forming tools are open at the top as far as the station (8).

8. A device according to Claim 7, characterised in that on each forming tool (10) a cover (21) is provided, which is secured so as to be pivotable about a horizontal axis and which closes the forming tool at the top in a sealing manner.

9. A device according to Claim 8, characterised in that the cover (21) has a tongue (22) projecting downward into the forming tool, which when the cover is closed forms a corresponding recess (24) in the shaped body.

10. A device according to one of Claims 7 to 9, characterised in that each forming tool (10) has an ejector (20), which is mounted so as to be displaceable in axial direction and is able to be actuated by means of the ejection station.

11. A device according to one of Claims 8 to 10, characterised in that the forming tool (10) is covered on its inner faces with a teflon layer (19).

## Revendications

1. Dispositif pour la fabrication d'un corps moulé composé de tourbe, le cas échéant avec addition de substances nutritives, et d'une matière alvéolaire formée à partir d' un prépolymère de polyuréthanne hydrophile, destiné à cultiver une jeune plante, ce dispositif utilisant un plateau tournant avec plusieurs postes de travail, caractérisé par des postes de dosage (3), (4) dans lesquels sont amenées, successivement, de la tourbe ainsi que de l'eau à un outil de formage (10), un poste d'addition (6) situé à la suite et dans lequel le prépolymère de polyuréthanne hydrophile est chargé dans l'outil de formage, un poste de mélange (7), dans lequel le prépolymère de polyuréthanne est mélangé au mélange de tourbe et d'eau et, enfin, un poste (9) pour l'évacuation du corps moulé terminé.

2. Dispositif selon la revendication 1, caractérisé en ce qu'il est prévu un poste de prémélange (5) entre le dernier poste de dosage (4) et le poste d'addition (6).

3. Dispositif selon la revendication 1 ou 2, caractérisé en ce que le poste d' addition présente un bras mélangeur (15) qui est fixé de manière à pivoter.

4. Dispositif selon la revendication 1 ou 2, caractérisé en ce que le poste de mélange (7) présente un bras mélangeur (16), qui est fixé au poste de mélange (7) de manière à pivoter.

5. Dispositif selon l' une des revendications 1 à 4, caractérisé en ce qu'il est prévu, entre le poste d'addition (6) et le poste de mélange (7), un appareil de nettoyage (13) avec une chambre de nettoyage (14), la chambre de nettoyage (14) étant disposée dans la plage de pivotement des bras mélangeurs (15), (16) et ceux-ci pouvant entrer dans la chambre (14) par pivotement.

6. Dispositif selon la revendication 1, caractérisé en ce que le poste (9), destiné à l'évacuation du corps moulé terminé, et le poste (8) sont disposés contre le plateau porte-outils avec une distance angulaire telle que le temps au cours duquel le plateau porte-outils (19) parcourt cette distance angulaire dans le cycle est égal au temps de séjour qui est nécessaire pour la réaction du mélange d'eau et de tourbe avec la matière plastique.

7. Dispositif selon la revendication 1, caractérisé en ce que le plateau porte-outils (19) présente une pluralité d'outils de formage répartis à intervalles réguliers sur sa périphérie et qui, jusqu'au poste (8), sont ouverts vers le haut.

8. Dispositif selon la revendication 7, caractérisé en ce qu'il est prévu, sur chaque outil de formage (10), un couvercle (21) qui est monté pivotant autour d'un axe horizontal et qui ferme hermétiquement vers le haut l'outil de formage.

9. Dispositif selon la revendication 8, caractérisé en ce que le couvercle (21) comporte une broche (22) qui fait saillie vers le bas dans l'outil de formage et qui, lors de la fermeture du couvercle, forme un évidement (24) correspondant dans le corps moulé.

10. Dispositif selon l'une des revendications 7 à 9, caractérisé en ce que chaque outil de formage (10) comporte un éjecteur (20) qui est monté mobile dans le sens axial et qui peut être actionné au moyen du poste d'évacuation.

11. Dispositif selon l'une des revendications 8 à 10, caractérisé en ce que l'outil de formage (10) est revêtu, sur ses surfaces internes, d'une couche de Téflon (17) pour faciliter le glissement.
